# EUROPEAN PATENT APPLICATION

(11) **EP 4 600 521 A1**
(43) Date of publication of application: **13.08.2025**
(21) Application number: 24156224.8
(22) Date of filing: 07.02.2024
(51) Int. Cl.: F16C 33/66, F16C 41/00, F16C 19/22, F16C 23/08

(54) **BEARING ASSEMBLY AND BEARING SYSTEM**

(71) Applicant: Nordex Energy SE & Co. KG, 22419 Hamburg (DE)
(72) Inventor: NITZPON, Joachim, 22419 Hamburg (DE); HARICH, Martin, 22419 Hamburg (DE); KOHLRUSCH, Matthias, 22419 Hamburg (DE); GERICKE, Thomas, 22419 Hamburg (DE); DAHNKE, Arno, 22419 Hamburg (DE)
(74) Representative: Epping - Hermann - Fischer

(57) **Abstract**

A bearing assembly (120) for a wind turbine (100) comprises:
- a bearing (121) with an inner ring (122), an outer ring (123), and a rolling element (124) arranged between the inner ring (122) and the outer ring (123), wherein the bearing (121) is configured to rotatably support at least a portion of a rotatable member (125) extending along an axial direction (126),
- an enclosure (127), wherein the enclosure (127) encloses an interior space (128) in which the bearing (121) is arranged,
- a deflection arrangement (200) for deflecting lubricant (300) towards the bearing (121), wherein the deflection arrangement (200) is arranged in the interior space (128) and is axially distanced from the inner ring (122) and axially distanced from the outer ring (123).

## Description

The disclosure relates to a bearing assembly for a wind turbine. The disclosure further relates to a bearing system for a wind turbine.

A wind turbine may include a rotor that includes a rotatable rotor assembly having multiple rotor blades. The rotor blades transform wind energy into a drive torque that drives the generator of the wind turbine via a drive train.

It is desirable to provide a bearing assembly which provides a reliable operation and has a reliable lubrication to ensure that the availability of lubricant across the entire operating zone of the bearing is ensured to be optimal.

It is further desirable to provide a bearing system which provides a reliable operation.

A rotor assembly for example includes a rotor shaft supported by one or more bearing assemblies, each of which includes a lubrication system. A bearing assembly has a bearing encompassing certain moving and stationary elements. Such elements need to be aptly lubricated, especially at contacts or interfaces, to minimize friction or wear, and therefore, ensure smooth relative movements. Lubrication is also crucial to carry away the heat generated during the process and also to expel impurities/undesired substances which may be present within the lubricant in use. A typical issue associated with lubrication of certain bearings, for example, large roller bearings is that the lack of availability or insufficiency of the lubricant at certain regions or sections of the bearing.

Embodiments of the disclosure provide a bearing assembly for a wind turbine. The bearing assembly comprises a bearing. The bearing comprises an inner ring and an outer ring, and a rolling element arranged between the inner ring and the outer ring. The bearing is configured to rotatably support at least a portion of a rotatable member extending along an axial direction. The bearing comprises an enclosure. The enclosure encloses an interior space, and the bearing is arranged in the interior space. The bearing comprises a deflection arrangement. The deflection arrangement is configured to deflect lubricant towards the bearing. The deflection arrangement is arranged in the interior space. The deflection arrangement is axially distanced from the inner ring. The deflection arrangement is axially distanced from the outer ring.

In one embodiment, the rolling element refers to a plurality of rolling elements arranged between the inner ring and the outer ring at raceways of the bearing. For example, the inner ring, the outer ring and the rolling element(s) constitute the bearing.

For example, the bearing is a rotor bearing which is configured to support a rotor (main) shaft of the wind turbine. In this example, the rotor shaft is the rotatable member that extends along the axial direction between a rotor hub and an electric generator via a drive train. Embodiments of the present disclosure may be extended to various bearing types or applications, for example, a generator shaft bearing, a gearbox bearing, a slewing bearing of a pitch bearing arrangement and/or a yaw bearing arrangement. Correspondingly, the rotatable member may be any shaft and/or any cylindrical extension, for example a root end section of a rotor blade that can rotate. A flange, or a similar rotatable element, is possible as well.

According to an embodiment, the deflection arrangement is configured to deflect the lubricant towards the rolling element and/or a raceway of at least one of the inner ring and the outer ring of the bearing.

The enclosure encloses the inner (or interior) space in which, for example, lubricant for the bearing is provided or contained. The enclosure may define a closed volume in the case of a pitch (slewing) bearing and/or a yaw (slewing) bearing. The enclosure may also be referred to as "housing", in particular in the case of a rotor bearing, a gearbox bearing, and/or a generator bearing.

In an embodiment, the interior space may refer to an empty space inside the enclosure which may be filled with or contained with a lubricant, like grease, and the movable elements such as one of the bearing rings and the rolling elements are configured to move through the lubricant volume. This may result in the lubricant being carried by the movable elements as they move i.e., rotate.

The interior space may be confined by various segments of the bearing assembly.

In an embodiment, the lubrication may be of hydrostatic type or hydrodynamic type lubrication.

The deflection arrangement is configured and arranged such that, during operation of the wind turbine, i.e., during rotation of the bearing along with the rotatable member, the lubricant is deflected by the deflection arrangement towards the bearing. In one embodiment, the deflection (vector) comprises an axial component. The deflection (vector) may also comprise a component in other directions, for example, a component inclined to the axial direction, a component curvilinearly oriented relative to the axial direction, a component tangential to a rolling surface of the rotating member and/or the rolling elements, a component along the radial direction and/or inclined to the radial direction of the bearing or the rotatable member perpendicular to the axial direction, and/or various combinations of movement direction, which comprise or can be referenced or resolved relative to an axial component.

The deflection arrangement contributes to ensuring that the lubricant is available as desired across the entire operating zone of the bearing.

In one embodiment, the deflection arrangement is situated away from the inner ring as well as away from the outer ring in the axial direction. For example, there is an axial gap between the deflection arrangement and the inner ring, such that the deflection arrangement and the inner ring in particular have no common contact area. A similar example is there is an axial gap between the outer ring and the deflection arrangement, such that the outer ring and the deflection arrangement have no common contact area.

In an embodiment, the axial spacing of the deflection arrangement from the inner ring as well as the outer ring provides greater flexibility in terms of assembly or disassembly or inspection or repair or maintenance or replacement of the deflection arrangement independent of the bearing.

In an embodiment, the deflection arrangement is beneficial in terms of compatibility with standard bearings and is retrofittable with respect to existing bearing assemblies.

In another embodiment, the axial spacing of the deflection arrangement from the inner ring as well as the outer ring provides greater flexibility in terms of design of the deflection arrangement independent of the design or nature of the bearing.

In yet another embodiment, the axial spacing of the deflection arrangement from the inner ring as well as the outer ring allows the deflection arrangement to be supported inside the interior space without the need for establishing any connection (direct or indirect) with the inner ring or the outer ring.

In still another embodiment, if a width of the inner ring is not the same as a width of the outer ring, the deflection arrangement may still maintain an axial gap with both the rings (outer and inner). For example, if the outer ring (stationary) is wider than the inner ring (rotating ring), then the deflection arrangement is axially distant from the outer ring, which inherently makes the deflection arrangement maintain an axial gap from the inner ring. However, in such a scenario, the axial spacing of the deflection arrangement from each of the rings is different.

For example, the axial direction corresponds to a rotation axis of the rotating member. The axial direction, for example, is along the axis of rotation of the rotating member or coinciding with the axis of rotation of the rotating member, for example the axis of rotation of the rotor shaft. For example, the axial direction corresponds to the rotation axis of the bearing. For example, the axial direction corresponds to the blade axis or pitching axis in the case of a pitch bearing, to the tower axis in the case of a yaw bearing and/or to the main axis of a gearbox shaft or the generator shaft. For example, the axial direction is coinciding, parallel or substantially parallel to the axis of the rotating member, for example to the axis of the rotor, the blade and/or the tower depending on the examples above.

In an embodiment, the bearing assembly comprising the deflection arrangement (described above) may be arranged on both rotor side and gearbox side of the main shaft of the wind turbine.

The bearing assembly, in particular, the bearing, is lubricated with the lubricant, for example with grease or another lubricant like an oil. In particular, the lubricant is flowable or viscous. For a reliable lubrication of the bearing, it is desirable to have lubricant distributed along the load zones, for example, one or more load zones present in a lower region of the bearing, and also in an upper region of the bearing. In one embodiment, the deflection arrangement may enable transportation of the lubricant to the lower zone and from the lower zone to the upper zone effected by the rotation of the bearing and/or the rotatable member, by overcoming gravitational forces.

In one embodiment, the configuration and positioning of the deflection arrangement is aimed at reducing the extent by which lubricant moves or flows away from the vicinity of bearing inside the interior space. In other words, the deflection arrangement increases the availability of at least a portion of the lubricant to effectively lubricate various contact surfaces or interfaces, for example, moving to moving contact surfaces (interfaces) and stationary to moving contact surfaces (interfaces) between the inner ring and the outer ring.

The deflection arrangement directs the lubricant towards the rolling element such that, during operation, the movement of the rolling element in a circumferential direction from the lower region to the upper region also transports lubricant towards the upper region. The deflection arrangement improves the lubricant supply towards the rolling element, in particular along the axial direction or substantially axial direction and promotes a lubricant flow towards the raceways of the bearing rings where the rolling element or the plurality of rolling elements contact the raceways. For example, lubricant that gets squeezed out of the bearing raceways or the vicinity of rolling elements during operation is deflected or diverted or routed back to the bearing raceways or over the rolling elements or both by the deflection arrangement.

In an embodiment, the deflection arrangement may be arranged in the interior space such that the deflection of the lubricant towards the rolling elements or the raceways is effectuated by means of mixed flow i.e., the deflection is characterised by a mix of axial and radial flow towards the rolling elements or the raceways relative to the axial direction.

In an embodiment, the deflection arrangement is arranged to create a pumping effect on the lubricant resulting in deflection of the lubricant towards the rolling elements and/or the raceways.

According to an embodiment, the deflection arrangement comprises a deflection element. The deflection element has a surface which is inclined with respect to the axial direction. Alternatively, or in addition, the surface is inclined towards a leading surface of the rolling element. Furthermore, the surface may be inclined towards a raceway of the inner ring and/or the outer ring. The inclined surface is arranged to push and/or deflect the lubricant towards the rolling element and/or the raceway of the inner ring and/or the outer ring.

During operation, the lubricant is pushed against the surface of the deflection element due to the rotation of the rolling member and/or part of the bearing. The lubricant is deflected towards the rolling element and/or the raceway which is accompanied by changes in pressure of the lubricant. In particular, the lubricant approaching the inclined surface of the deflection element at one pressure is pushed at different pressure(s) towards the rolling element and/or the raceways. Thus, the deflection (flow) of the lubricant may be characterised by different pressure gradients.

In an embodiment, as the rolling element approaches (during rotation) the deflection element, the effective volume of the lubricant present or containing between the deflection element and the rolling element may be lesser in comparison to other zones.

Thus, the deflection arrangement may have an effect that an overpressure at a seal of the bearing can be prevented. The deflection element renders construction of the deflection arrangement simple ensuring an easy assembly, repair and/or replacement. The axial pumping effect at the surface of the deflection element, for example, is created by passing the rolling element past (i.e., axially distant but proximal to) the inclined surface of the deflection element. The axial pumping effect for deflecting lubricant towards the rolling elements and/or the raceways is, for example, effected as each of the rolling elements passes in front of the surface of the deflection element.

According to embodiments, the bearing assembly comprises a support. The support is configured to support the deflection arrangement, in particular, the deflection element in the interior space. For example, the support comprises, but not limited to at least one of a rod, a bar, a bracket, a mounting, a clamp, a beam, a channel, a closed-section member, and a fastening arrangement. The support is, for example, configured to support the deflection arrangement with respect to a component of the bearing assembly, for example with the enclosure, the sealing arrangement, etc., such that the deflection arrangement is axially distant from the inner ring as well as from the outer ring.

According to an embodiment, the support comprises a barrier. The barrier extends circumferentially inside the interior space. The barrier is configured to reduce a flow of the lubricant away from the rolling element. The barrier contributes to a reliable lubrication of the bearing in that the lubricant which has been deflected towards the rolling element is capped between the inner ring and the outer ring at the rolling element. This way, a flow of the lubricant away from the rolling element is reduced. In an embodiment, a hollow region within the interior space is filled or accommodated by the barrier. An axial gap between the rolling element and the enclosure is reduced by the arrangement of the barrier. Thereby the lubricant moving away from the rolling element in the axial direction is blocked. A sufficient lubricant level is thus realized and availability of lubricant for deflection of lubricant towards the rolling elements and/or raceways is enhanced.

According to an embodiment, the barrier extends circumferentially around the axial direction for up to 360°. For example, the barrier extends circumferentially over more than 15°, for example more than 30°, and less than 350°, for example less than 300°, less than 270° or less than 190°. For example, the barrier may be arranged in the lower region of the bearing assembly.

In one embodiment, a circumferential extent of the barrier or the support may be dependent on geometry, dimensions, and orientation of the deflection element.

According to an embodiment, the support encloses a hollow region which is in fluid communication with the interior space. The hollow region is configured to regulate a characteristic of the lubricant inside the interior space. For example, the hollow region may serve as a controlled outlet for the lubricant which takes part in throttling a flow of the lubricant out of the interior space such that sufficient lubricant is provided in the enclosure. Uncontrolled or undesired lubricant leakage can be avoided, for example, leakage through a sealing of the bearing assembly can be avoided.

The hollow region may also prevent an accumulation of the lubricant at the bottom, also referred to as the dead zone, of the bearing. The combination of the deflection arrangement and the hollow region realizes the desired distribution of the lubricant inside the bearing, and at the time same, facilitate maintenance of optimum volume of the lubricant in the interior space.

For example, the hollow region extends along the bearing in as an arcuate segment. For example, the hollow region is configured to provide a throttling effect and/or a choke effect for lubricant before the lubricant leaves the enclosure.

According to an embodiment, the deflection arrangement and the support are arranged at least partly in the interior space between a sealing arrangement of the bearing assembly and the bearing. In particular, the support along with the deflection arrangement separates or spaces apart the sealing arrangement from the bearing (inner ring, outer ring and rolling elements) in the axial direction. Thus, the sealing arrangement can be protected against overpressure. A leakage through the sealing arrangement can be provided. Sufficient lubrication is ensured, lubricant deviation (away from the bearing vicinity) is avoided and splashing losses can be kept low.

According to embodiments, the support is configured to at least partly adjoin a seal carrier of the sealing arrangement. For example, the deflection arrangement is supported against the seal carrier by the support. In an embodiment, the deflection element supported by the support may or may not contact the seal carrier.

In one embodiment, at least a portion of the support is arranged before the surface of the deflection arrangement relative to a main direction of the rotation of the rotatable member. Alternatively of in addition, at least a portion of the support is arranged behind the surface of the deflection arrangement relative to a main direction of the rotation of the rotatable member. The support and the surface of the deflection element are arranged such that, during operation, rolling elements may first approach the support and then the surface or the other way round.

In one embodiment, the inclined surface of the deflection element may protrude beyond a thickness or a width of the support towards the bearing.

According to an embodiment, the deflection arrangement comprises at least one of a planar form and a curvilinear form, in particular an arcuate form. The deflection arrangement is selected from one of a plate element, a sheet element, a bar element, a rod element, an open channel element, a closed channel element, a vane element, a flange element, and an angular bracket. The deflection arrangement is designed and shaped so as to deflect the lubricant towards the rolling element during operation of the bearing assembly.

According to an embodiment, the deflection arrangement extends at least over a length of the rolling element, i.e., a diameter of the rolling element. In particular, the deflection arrangement extends at least over the length of two directly adjacent rolling elements. This enables a reliable blocking of the flow of the lubricant away from the rolling element.

According to an embodiment, the deflection arrangement is fixed in position relative to the enclosure. For example, the deflection arrangement is fixed to the sealing arrangement, in particular to the sealing carrier. The rolling element can rotate relative to the deflection arrangement during operation. During operation, the rolling element moves relative to the enclosure and the deflection arrangement.

According to an embodiment, an orientation of the deflection arrangement can be adjusted relative to the axial direction and/or the leading surface of the rolling element by an adjusting device. For example, the orientation of the deflection arrangement is adjusted dependent on a desired deflection effect, for example load dependent and/or speed dependent. The adjustment may also depend on other factors such as dimensions of the bearing components and the interior space, type of lubricant, necessary operating pressure, viscosity, and so on. For heavy loads, a maximum pumping effect is desired, and the orientation of the deflection arrangement is adjusted accordingly. The adjusting device, for example, comprises a mechanism with which the orientation, in particular the angle or projection of the deflection arrangement can be changed. The mechanism can be for example a telescopic mechanism or a linear actuator.

In one embodiment, the adjustment may be automatic based on input or feedback regarding one or more characteristics, for example, loads on the bearing, pressure and/or volume of the lubricant inside the bearing assembly, quality of the lubricant, and so on.

In an embodiment, the orientation of the deflection arrangement can be adjusted relative to the axial direction and/or the leading surface of the rolling element and/or the raceway during routine inspection or maintenance procedure by maintenance personnel.

According to an embodiment, the deflection arrangement is movable within the interior space. For example, the deflection arrangement is movable relative to the enclosure. For example, the deflection arrangement is movable relative to the sealing carrier.

According to an embodiment, the deflection arrangement is fixed to a rotatable element of the bearing assembly. For example, the deflection arrangement is fixed to at least one of a cage and the rolling element. The cage is configured to support the rolling element. Thus, during operation the deflection arrangement moves together with the cage and/or the rolling element.

According to an embodiment, the bearing assembly comprises an attachment configured to fix the deflection arrangement to the rotatable element of the bearing assembly.

According to an embodiment, the deflection arrangement comprises a rotatable propeller. For example, the rotatable propeller rotates together with the rolling element during operation. The lubricant is deflected towards the rolling element due to the rotation of the rotatable propeller. For example, the rolling element comprises a screw type propeller.

Embodiments of the disclosure provide a bearing system for a wind turbine. The bearing system comprises a bearing assembly according to any one of the embodiments described herein. The bearing system comprises the rotatable member. The rotatable member is rotatably supported by the bearing. The deflection arrangement is configured to deflect the lubricant towards the rolling element of the bearing during a rotation of the rotatable member.

Features and advantages of the described bearing assembly also apply to the described bearing system and vice versa.

According to an embodiment, the bearing system comprises a nut. The nut is fixed or fastened around at least a portion of the rotatable member. The nut is axially distant or in axial contact with the inner ring or the outer ring. The deflection arrangement is fixed to the nut. Thus, the deflection arrangement rotates together with the nut and the rotatable member during operation of the bearing system. The nut is a shaft nut in case of a rotor bearing assembly.

According to an embodiment, the bearing system comprises a lubricant raising element for directing lubricant towards an upper region of the bearing. For example, the lubricant raising element is coupled to the rotatable member. For example, the lubricant raising element is a nut or groove in the rotatable member. Alternatively, or in addition, the rotatable member comprises a paddle and/or shovel or any other element which is configured to convey lubricant towards the upper region of the bearing. The lubricant raising element can be particularly advantageous when the lubricant has relatively lesser viscosity, for example, oil.

In one embodiment, the lubricating raising element may be formed or defined in a repeating manner along the circumference of the rotatable member.

According to an embodiment, the bearing assembly may comprise a series of deflection arrangements. For example, a first deflection arrangement which may be in a fixed position relative to the enclosure, e.g., fixed to the seal carrier, and a second deflection arrangement which may be movable relative to the enclosure, i.e., fixed to the nut or the cage or the rolling element.

In one embodiment, the first deflection arrangement may be arranged in a fixed position relative to the enclosure axially distant from one side of the bearing, and the second deflection arrangement may be arranged in a movable manner relative to the enclosure axially distant from another side of the bearing.

For example, in case of a two-row rolling element arrangement, the first deflection arrangement may be arranged proximal to one rolling element (first row), and the second deflection arrangement may be arranged proximal to the other rolling element (second row) and away from the former rolling element, or vice versa.

Further embodiments of the disclosure provide a wind turbine. The wind turbine comprises a bearing assembly and/or bearing system according to one of the described embodiments. For example, the wind turbine comprises a nacelle and a rotor, and the bearing assembly and/or the bearing system is arranged within the nacelle or with the rotor.

The present invention will be further described with reference to the accompanying drawings. In the drawings, elements of the same structure and/or functionality may be referred to by the same reference signs. It is to be understood that embodiments showing the figures are illustrative representations and are not necessarily drawn to scale.

Figure 1 is a schematic view of a wind turbine according to an embodiment.

Figures 2 and 3 are schematic views of a bearing assembly according to some embodiments.

Figure 4 is a schematic view of a deflection arrangement according to an embodiment.

Figure 5 is a schematic view of the bearing assembly showing the deflection arrangement with the deflection element according to an embodiment.

Figures 6 to 12 are schematic views of a bearing system and details thereof according to different embodiments.

While the invention is amenable to various modifications and alternative forms, specifics thereof have been shown by way of examples in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

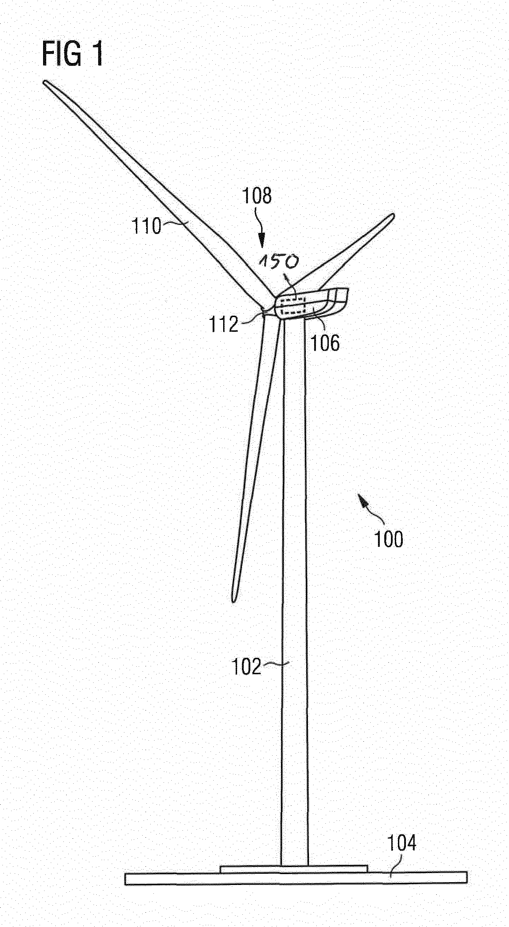

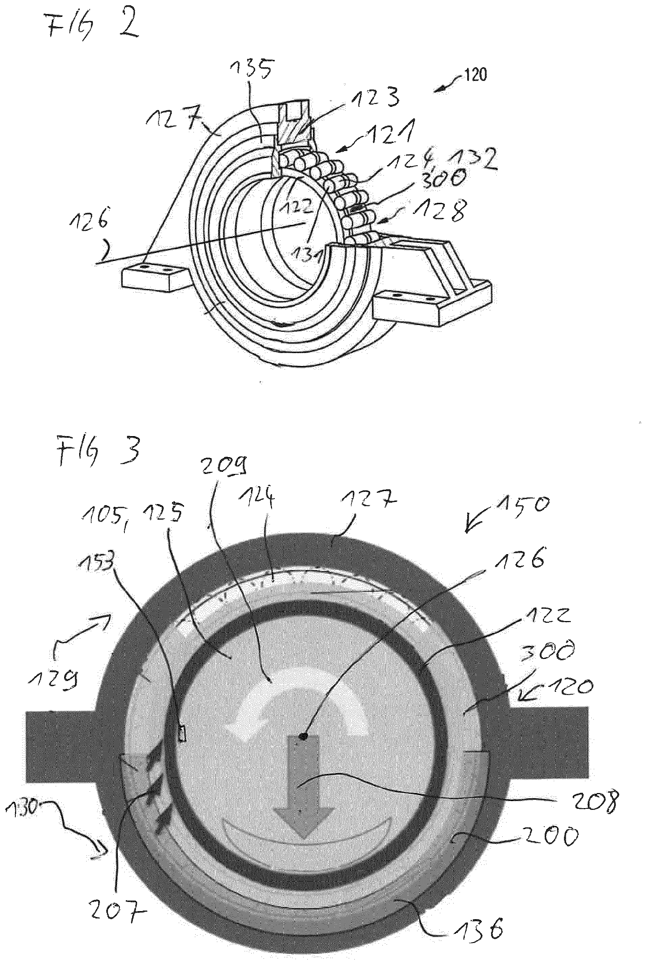

As shown in Figure 1, a wind turbine 100 comprises a tower 102. The tower 102 is connected to a foundation 104 fixed to the ground. Specifically, the foundation 104 is formed at predetermined depth inside the ground, which is reinforced by a composite structure, for example a concrete support, for sturdiness. A nacelle 106 is arranged on a top end of the tower 102 opposite to the foundation 104. The nacelle 106 carries the rotor 108 and houses the drive train among other components and subassemblies. Inside the nacelle 106, for example, a generator is arranged that is connected to the rotor 108 via the drive train. The drive train comprises, for example, a gearbox (not shown) and a rotor shaft 105 (Figure 3) assembly. The rotor 108 comprises several rotor blades 110. The rotor blades 110 are rotatably mounted on a rotor hub 112. The rotor hub 112 is connected to the rotor shaft 105.

The rotor 108 is driven by an airflow, for example, interaction of moving wind with the blades of the rotor 108. The rotational movement of the rotor 108 is transmitted via the drive train to the generator. The generator converts the mechanical output of the rotor 108 into electrical energy.

The wind turbine 100 comprises a bearing system 150. The bearing system 150, for example, comprises at least one of a rotor bearing, a generator bearing, a bearing inside the gearbox, a pitch bearing and a yaw bearing. Other bearings are possible as well. Although Figure 1 depicts the bearing system 150 in connection with the drive train inside the nacelle 106, it should not be construed as a limitation, as the bearing system 150 of the disclosure may be associated with other movable subassemblies, such as the pitch or blade bearing at the interface with each blade 110 and the hub 112, or a yaw bearing at the interface of the nacelle 106 and the tower 102.

Figure 2 shows a bearing assembly 120 of the bearing system 150 according to an embodiment. For the purpose of illustration, the bearing assembly 120 is described as an exemplary rotor bearing arrangement which is used to support the rotor shaft 105 (Figure 3) at two or more locations along the length of the shaft 105.

According to an exemplary embodiment of the rotor shaft (main shaft) bearing, the bearing assembly 120 comprises an enclosure 127, for example a bearing housing, which may support a portion of the rotor shaft 105 along an axial direction 126. The enclosure 127 encloses or defines an interior space 128. A bearing 121 is located in the interior space 128. The bearing 121 may be annularly present between the rotor shaft 105 (or any other rotatable member 125 in case of other applications) and the enclosure 127. The interior space 128, for example, is formed or defined around the bearing 121 within the enclosure 127. The interior space 128 inside the enclosure 127 may refer to void space which may allow movement of a lubricant 300 together with some movable elements of the bearing 121.

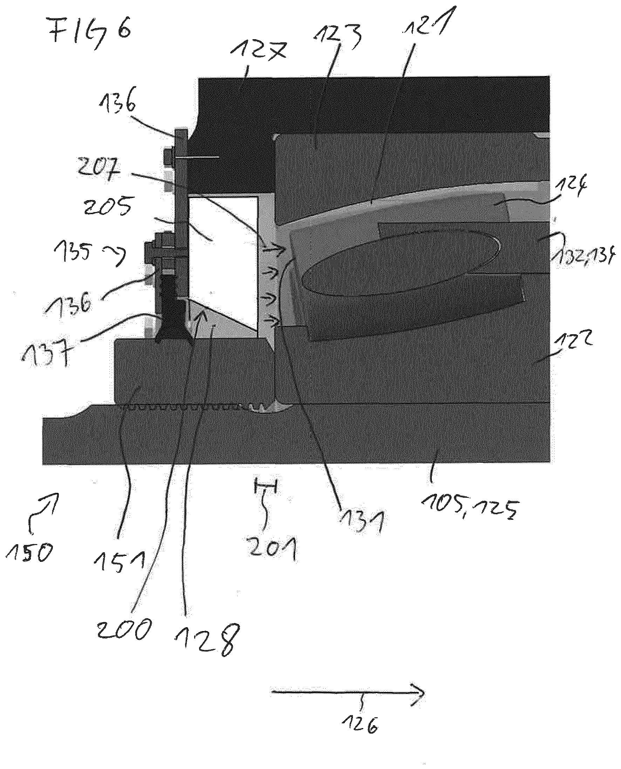

The interior space 128 is sealed by a sealing arrangement 135 on the front side and/or on the rear side of the enclosure 127 during operation. As shown, for example, in Figure 6, the sealing arrangement 135 comprises a seal carrier 136 which secures a sealing element 137 (or seal) with the enclosure 127. The sealing element 137 may be, for example, an elastomeric sealing element like a rubber seal.

The bearing 121 comprises an inner ring 122, an outer ring 123 and rolling elements 124 which enable the relative rotation between the inner ring 122 and the outer ring 123.

In one embodiment, the inner ring 122 comprises and/or defines a raceway 138 and the outer ring 123 comprises and/or defines a raceway 139. The raceways 138, 139 support and/or accommodate the rolling elements 124.

In one embodiment, the inner ring 122 is connected to the rotatable member 125, for example to the shaft 105 in case of the rotor bearing. The outer ring 123 is connected to the enclosure 127. Thus, the inner ring 122 may be the movable ring component of the bearing 121, while the outer ring 123 remains stationary with the enclosure 127. In an alternative embodiment, the inner ring 122 is attached to the enclosure 127, while the outer ring 123 is attached to the rotatable member 125, so that the movable and stationary ring configuration may be opposite in comparison to the earlier case. The rolling elements 124 may include, but are not limited to, cylindrical rolling elements, tapered rolling elements or spherical rolling elements. The rolling elements 124 may be arranged in two or more rows as per the requirement along the axial direction.

In an embodiment, the rows of the rolling elements 124 may be a combination of two or more rolling element types.

The lubricant 300 is provided in the interior space 128 for lubricating the bearing 121, and in particular the rolling elements 124 and the contact surfaces, e.g., contact surfaces of the rolling elements 124 with the bearing raceways 138, 139. The lubricant 300 in particular comprises grease or oil or any other viscous based lubricant.

As shown in Figure 3, a main load 208 may be concentrated at a given region of the bearing assembly 120, for example, at a lower region 130 of the bearing 121. A lubricant raising element 153, like a notch, a groove, and/or a blade, that is configured to raise lubricant 300 from the lower region 130 to an upper region 129 during rotation of the rotatable member 125 around the axial direction 126 may be provided in the rotatable member 125 and/or at the rotatable member 125.

The lubricant raising element 153 can be omitted in further embodiments.

The bearing system 150 including the bearing assembly 120 comprises a deflection arrangement 200. The deflection arrangement 200 is configured to deflect lubricant 300 from the interior space 128 towards the rolling elements 124 or the raceways 138, 139 along a deflection direction 207 or relative to a deflection direction 207. The deflection direction 207 is along or substantially along the axial direction 126 and may be towards a leading surface 207 of the rolling element 124 or the raceways 138, 139. The deflection direction 207 runs at an angle to the axial direction 126, so that lubricant 300 is deflected towards the rolling elements 124 by the deflection arrangement 200. During rotation of the rotatable member 125 in a main rotation direction 209, lubricant 300 is carried along by the rotating and/or moving components like the rotatable member 125, the rolling elements 124 and/or the inner ring 122 (or the outer ring 123 depending on the bearing). The carried-along lubricant 300 is pressed or pushed against the deflection arrangement 200 which thereby gets deflected or urged in the deflection direction 207 by the deflection arrangement 200, consequently getting pushed towards the rolling elements 124. Thus, the lubricant is subjected to pumping effect by the deflection arrangement 200 inside the bearing 121 to lubricate the rolling elements 124 between the inner ring 122 and the outer ring 123.

Figures 2 and 3 depict the bearing assembly 120 which may be present on both the sides of the rotor shaft, i.e., the rotor side of the rotor shaft and the gearbox side of the rotor shaft. The deflection arrangement 200, however, may be present either on the rotor side bearing assembly 120, or the gearbox side bearing assembly 120, or on both the sides.

In one embodiment, the bearing assembly 120 may be equipped with one or more sensing systems, for example, pressure sensing unit, temperature sensing unit, lubricant level sensing unit, quality sensor, etc., to monitor various characteristics associated with the bearing assembly 120 and/or the lubricant 300, like the lubricant pressure, temperature, level, etc.

In an embodiment, the deflection arrangement may be designed such that the flow characteristics of the lubricant being deflected may be optimized.

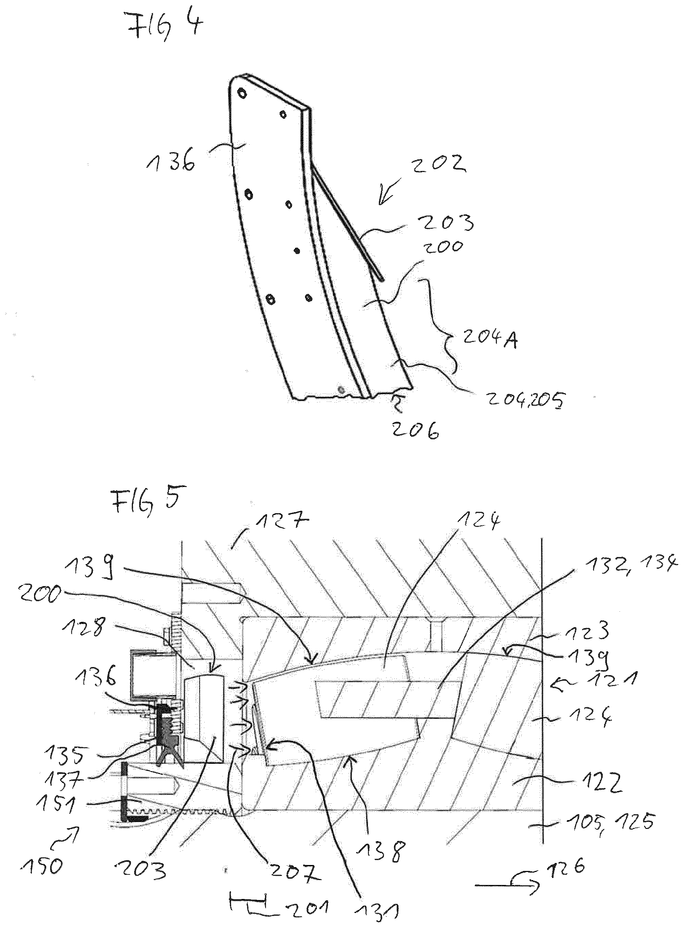

Figure 4 shows an embodiment of the deflection arrangement 200 with a deflection element 202 that is fixed relative to the enclosure 127, in particular fixed to the sealing arrangement 135, in particular fixed to the seal carrier 136.

The deflection arrangement 200 comprises a support 204 that extends, for example, in an arcuate manner along the seal carrier 136. In particular, the arcuate extent of the support 204 is at least as great as a diameter of a rolling element 125. For example, the arcuate extent is at least as great as two diameters of the rolling element 125 plus the distance between two directly adjacent rolling elements 124. For example, the support 204 extends over at least 10° and at most 360°. In particular, the support 204 extends between 5° and 190° or between 45° and 175°. For example, the deflection arrangement 200 and the support 204 are arranged in the lower region 130 of the bearing assembly 120.

In one embodiment, the deflection element 202 is movable relative to the support 204, for example, the deflection element 202 is pivotable and/or slidable relative to the support 204. Due to this movable configuration, the deflection element 202 may be oriented as desired and locked/restrained in the desired orientation during operation.

The deflection element 202 is arranged at one end of the support 204. In particular, the deflection element 202 is arranged at the front end in the main rotation direction 209.

In other embodiments, the deflection element 202 is arranged at either end or either extremity of the support 204, for example, one deflection element 202 arranged at say 5° and the other deflection element 202 arranged at say 190°. In such cases, the orientation of one deflection element 202 may be different from the other.

The deflection element 202 comprises an inclined surface 203 in the embodiment according to Figures 4 and 5. The surface 203 is inclined relative to the axial direction 126 and/or the rolling elements 124 and/or the raceways 138, 139 such that lubricant 300, which is pushed against the surface 203 during rotation of the rotatable member 125, is deflected towards the rolling elements 124 and/or the raceways 138, 139.

In one embodiment, the geometry and surface features of the deflection element 202 may be selected, modified, or adjusted to optimize the deflection of the lubricant towards the bearing 121. For example, surface features such as guiding channels or grooves or protrusions may be defined on the surface 203 to guide the lubricant for enhancement of the deflection.

The support 204 forms a barrier 205. The barrier 205 blocks the lubricant, for example, grease from flowing away from the rolling elements 124 or the raceways 138, 139 out of the bearing 121 the axial direction 126. Thus, lubricant 300, which is deflected into the bearing 121 by the deflection element 202, stays longer in the bearing 121 to lubricate the rolling elements 124 or the raceways 138, 139, in particular in the lower region 130 where the loads 208 are particularly strong.

According to the shown embodiment, the support 204 surrounds the hollow region 206. According to further embodiments, which are not explicitly shown, the support 204 is solid without the hollow region 206.

The hollow region 206 is in fluid communication with the interior space 203 and acts as a throttle for the lubricant 300 inside the hollow region 206. Thus, it is possible to keep the lubricant 300 inside the interior space 128 at a desired lubricant level.

For example, a further outlet may be provided in the seal carrier 136 which is blocked during normal operation. If the bearing assembly 120 is to be completely emptied and all lubricant 300 is to be removed, the further outlet 216 can be selectively opened.

The deflection element 202 and the support 204, particularly with the hollow region 206, can be employed to realize a reliable lubrication of the bearing 121 by creating a pumping effect on the lubricant 300 from the interior space 128 towards the rolling elements 124 and/or the raceways 138, 139 and by ensuring that the lubricant fills the bearing 121 until a desired lubricant level is reached, for example, in the upper region 129. Too much lubricant may lead to splashing losses or other negative effects which can be avoided by the hollow region 206.

As shown in Figure 4, the deflection element 202 may protrude beyond the width or the thickness of the support 204, such that at least a portion 204A of the support 204 is arranged behind (or concealed by) the surface 203 of the deflection arrangement 200 relative to a main direction 209 of rotation of the rotatable member 125. This may enhance the area of contact between the surface 203 and the lubricant resulting in improved deflection towards the rolling elements 124 and/or the raceways 138.

Figure 6 shows a cross-section of the bearing system 150 with the deflection arrangement 200 according to the embodiment as shown in Figures 4 and 5. The interior space 128 in which the lubricant 300 can accumulate outside the bearing 121 is reduced by the deflection arrangement 200 with the barrier 205. During rotation of the rotatable member 125, grease is pushed from the deflection arrangement 200 towards the rolling elements 124 in the axial direction 126.

The deflection arrangement 200 is fixed to the seal carrier 136. For example, the deflection arrangement 200 is an integral part of the seal carrier 136. The deflection arrangement 200 is arranged such that the deflection arrangement 200 comprises a distance 201 along the axial direction 126 to the inner ring 122 and to the outer ring 123. A gap is provided between the deflection arrangement 200 and the inner ring 122. A gap is provided between the deflection arrangement 200 and the outer ring 123.

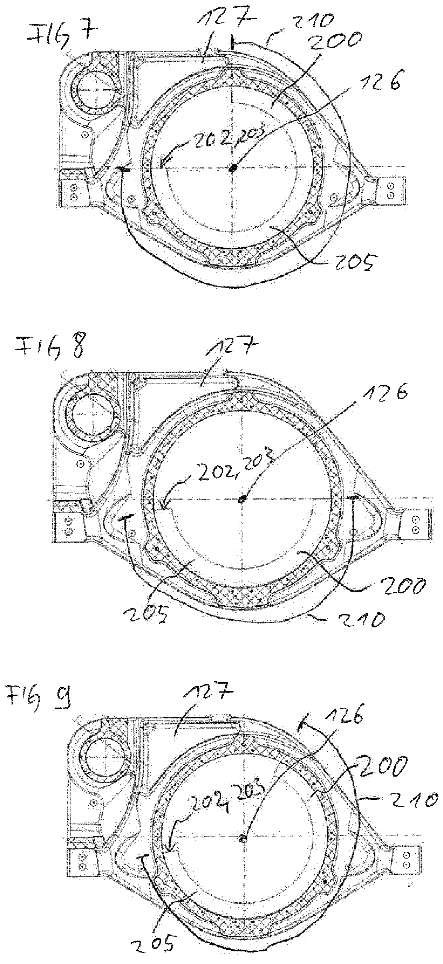

Figures 7 to 9 show examples of the deflection arrangement 200 which is part of the enclosure 127 instead of the seal carrier 136. Apart from that, the deflection arrangement 200 corresponds to the above described, for example. The deflection arrangement 200 with the deflection element 202, in particular the surface 203 and the support 204, in particular the barrier 205, is integrally or removably attached to the enclosure 127, for example to the bearing housing.

As shown in Figures 7 to 9, a length 210 of the deflection arrangement 200 can be as long as desired. This also applies to the deflection arrangement 200 according to Figures 4 to 6, which is fixed to the sealing arrangement 135.

According to the embodiments of Figures 4 to 9, the deflection arrangement 200 is fixed in position relative to the enclosure 127. The rolling elements 124 and the inner ring 122 are arranged rotatable relative to the deflection arrangement 200. Also, a cage 134, which holds the rolling elements 124 in position relative to each other, is arranged rotatable relative to the deflection arrangement 200. The deflection arrangement 200 is not movable relative to the enclosure 127 during operation of the wind turbine 100.

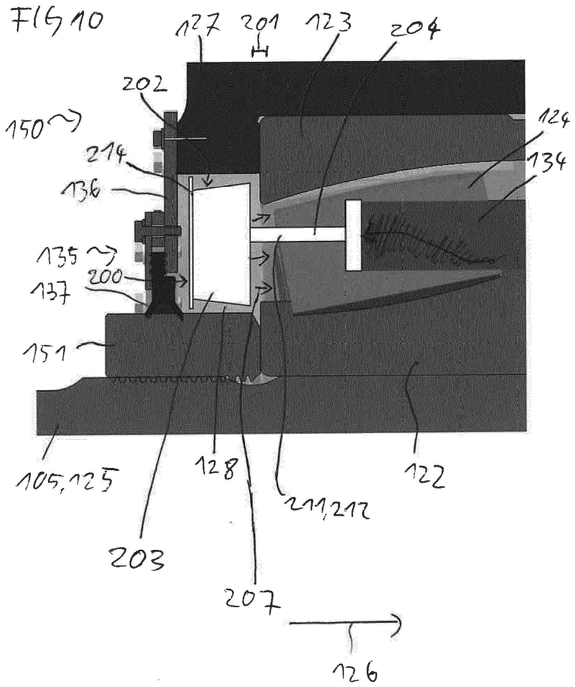

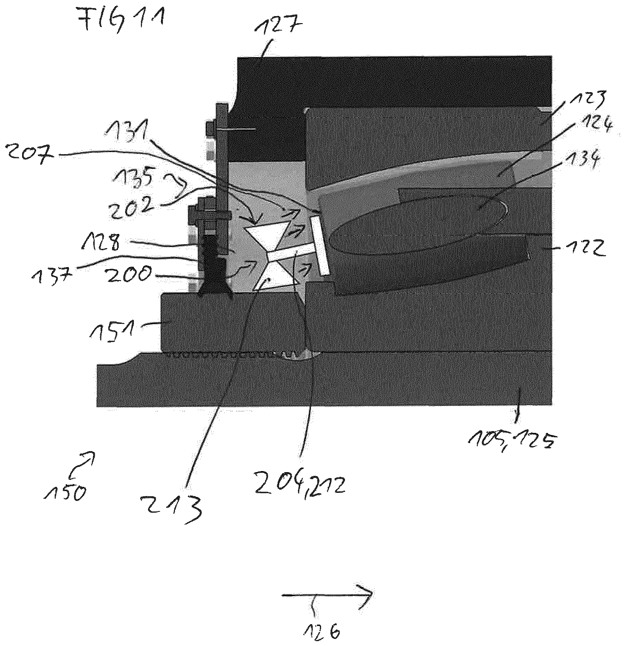

According to the embodiments as shown in Figures 10 to 12 the deflection arrangement 200 is rotatable in the interior space 128 relative to the enclosure 127. As shown in Figures 10 and 11 in different embodiments, the deflection arrangement 200 is fixed to a rotatable element 132 of the bearing assembly 120.

As for example shown in Figure 10, the deflection element 202 of the deflection arrangement 200 is fixed to the cage 134. When the cage 134 rotates during operation of the bearing system 150 relative to the enclosure 127 and the outer ring 123, the deflection element 202 rotates together with the cage 134. The deflection element 202 is connected to the cage 134 via an attachment 212 which secures the deflection element 202 with the cage 134. The deflection element 202, for example, is rotatable relative to the inner ring 122 and relative to the outer ring 123 together with the cage 134. The deflection element 202 in particular is rotatable relative to the enclosure 127 and relative to the rotatable member 125.

The deflection element 202 comprises the surface 203 to deflect lubricant towards the rolling elements 124. According to embodiments, the deflection element 202 also comprises a protector 214. According to further embodiments, the protector 214 is omitted. The protector 214 extends perpendicular to the axial direction 126. The protector 214 protects the sealing arrangement 134, and in particular the sealing element 137, against undesirably high pressure from the lubricant 300 against the axial direction 126 against the sealing 137. The deflection element 202, with the surface 203 and the protector 214, ensures that lubricant is deflected with a high pressure towards the rolling elements 124 and the sealing 137 is protected against these high pressures.

According to embodiments, the bearing system 150 comprises a plurality of deflection arrangements 200 as described. It is also possible that just one single deflection arrangement 200 is provided.

Figure 11 shows an embodiment according to which the deflection arrangement 200 is fixed to one of the rolling elements 124. As mentioned above, it is possible that just one single deflection arrangement 200 is provided which is fixed to the one of the rolling elements 124. It is also possible that a plurality of deflection arrangements 200 is provided, wherein each one of the deflection arrangements 200 is fixed to another one of the rolling elements 124.

The deflection arrangement 200 comprises a rotatable propeller 213 which rotates together with the rolling element 124. The rotatable propeller 213 is fixed to the rolling element 124 via the support 204 and the attachment 212 respectively. In particular, the rotatable propeller 213 is fixed to a leading surface 131 of the rolling element 124. The leading surface 131 faces the sealing arrangement 135. The leading surface 131 is inclined transverse to the running surface of the sealing arrangement 135. For example, the leading surface 131 is planar in case of cylindrical or tapered rolling elements 124 and curved in case of spherical rolling elements 124.

The deflection arrangement 200 in the embodiment of the rotatable propeller 213 is rotatable with respect to the enclosure 127, the inner ring 222, the outer ring 223, the cage 134 and the rotatable member 125. The rotatable propeller 213 is also rotatable relative to the sealing arrangement 135.

In an embodiment, the attachment 212 may be of a fixed configuration (e.g., fixed length) or of a variable configuration (e.g., variable length like telescopic). The variable configuration allows adjustment of axial distance between the deflection element 202 and the rolling elements 124 and/or the raceways 138, 139. As described in earlier embodiments, the orientation of the deflection element 202 can be adjusted through an adjusting mechanism.

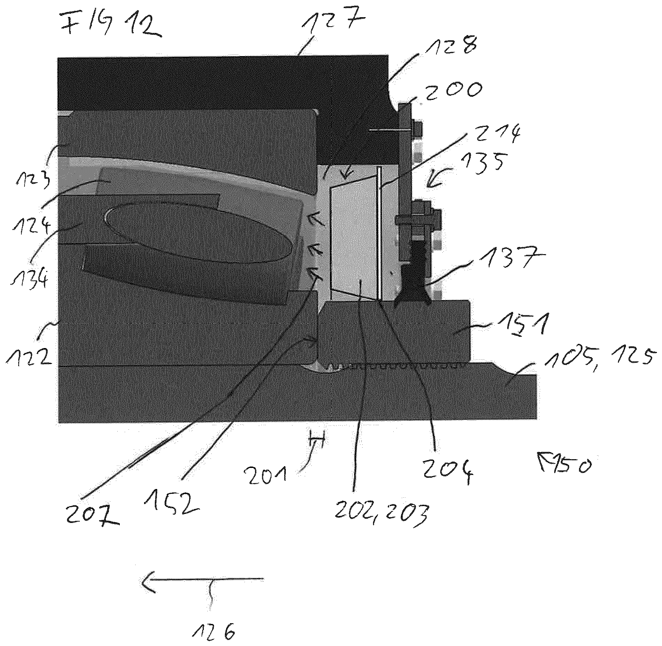

Figure 12 shows an embodiment according to which the deflection arrangement 200 is fixed to a nut 151, for example, a shaft nut in case of the rotor bearing. The deflection arrangement 200 is arranged such that it comprises the distance 201 to the inner ring 122 and to the outer ring 123. The shaft nut 151 is fixed in position around the rotatable member 125 such that the shaft nut 151 rotates together with the rotatable member 125 during operation. The shaft nut 151 and the inner ring 122 may or may not comprise a common contact area 152.

It is possible that just one single deflection arrangement 200 is provided which is fixed to shaft nut 151. It is also possible that a plurality of deflection arrangements 200 is provided.

During operation, the deflection arrangement 200 rotates together with the rotatable member 125 and the shaft nut 151. As shown in Figure 12, according to embodiments the deflection element 202 comprises the protector 214 as described in connection with Figure 10. According to further embodiments, the protector 214 is omitted. According to the embodiment of Figure 12, the deflection arrangement 200 is rotatable relative to the enclosure 127, the outer ring 123, the sealing arrangement 135, the rolling elements 124, and the cage 134. The deflection arrangement 200 is fixed in position relative to the rotatable member 125 via the shaft nut 151.

The deflection arrangement 200 according to the different embodiments uses the rotational movement of the rolling elements 124, the cage 134, the inner ring 122 and the rotatable member 125 and/or the shaft nut 151 relative to the deflection arrangement 200 to create an axial pumping effect from the face side to the inside of the bearing 121 related to the axis 126 of rotation. The deflection arrangement 200 is arranged in the space between the bearing 121 and the enclosure 127, which can be referred to as "lubricant reservoir". Above a certain lubricant level in the housing, lubricant may collect in this space, which may not actively participate in lubrication.

In particular according to the embodiments of figures 4 to 9, the rolling elements 124 as they rotate cause a lubricant jam on the deflection element 202 which is fixed at a defined position before the load zone at the enclosure 127 or the seal carrier 136. The deflection arrangement 200 blocks the free cross-section area of the dead space and jams the circulating lubricant 300, and the inclined surface 203 deflects the lubricant 300 towards the rolling elements 124 and/or the raceways 138, 139.

Behind the deflection element 202 in the rotating direction 209 it is beneficial to reduce the free space between the bearing 121, the sealing arrangement 135, the shaft nut 151 and the enclosure 127 to get a more stable lubricant circulation. Therefore, the barrier 205 is provided which helps to keep the lubricant 300 in the rolling contact area and supports the rotational movement of the lubricant 300 to create the jam before the defection element 202. The deflection arrangement 200 is for example formed like a 180° circular ring segment but can be executed longer or shorter, in particular depending on the lubricant fluidity.

The deflection arrangement 200 according to the different embodiments of figures 10 to 12 essentially works in the same way as described above. However, deflection arrangement 200 is attached to rotatable element 132, like the cage 134, the rolling element 124 or the shaft nut 151. When the rotatable member 125 rotates, the rotating deflection arrangement 200 squeezes out the lubricant 300 from the lubricant reservoir. Rotational speed-dependent deflection is possible. The inclined surface 203 in the direction of the main rotation helps to create an axial pumping effect towards the rolling elements 124 and not towards the sealing element 137. The optional, additional protector 214, which is for example longer than the deflection element 202 along the rotation direction 209 on the sealing side of the rotatable deflection arrangement 200 helps to protect the sealing element 137 from the induced pressure surges.

The deflection arrangement 200 according to the different embodiments is simple in construction and easy to assemble, repair and/or replace. For example, a retrofit to existing wind turbines 100 is possible. The lifetime of the bearing system 150 can be prolonged. Thus, cost savings are possible. A sufficient desired lubricant level is ensured, in particular due to the barrier 205. The arrangement inside the enclosure 127 in the interior space 128 needs no, or little, space. Pushing the lubricant 300 away from the sealing element 137 and a possible additional protection by the protector 214 improves the life of the sealing element 137 by preventing overpressure. A larger amount and/or a larger percentage of lubricant 300 participates in the lubrication process and the rotation speed dependent lubricant flow improves the local cooling in the bearing 121.

### References

100 wind turbine
102 tower
104 foundation
105 shaft
106 nacelle
108 rotor
110 rotor blade
112 rotor hub
120 bearing assembly
121 bearing
122 inner ring
123 outer ring
124 rolling element
125 rotatable member
126 axial direction
127 enclosure
128 interior space
129 upper region
130 lower region
131 leading surface
132 rotatable element
134 cage
135 sealing arrangement
136 seal carrier
137 sealing element
138, 139 raceway
150 bearing system
151 nut/shaft nut
152 common contact area
153 lubricant raising element
200 deflection arrangement
201 distance
202 deflection element
203 surface
204 support
204A portion
205 barrier
206 hollow region
207 deflection direction
208 load
209 main rotation direction
210 length of the deflection arrangement
211 adjusting device
212 attachment
213 rotatable propeller
214 protector
300 lubricant

## Claims

1. Bearing assembly (120) for a wind turbine (100), comprising
- a bearing (121) with an inner ring (122), an outer ring (123), and a rolling element (124) arranged between the inner ring (122) and the outer ring (123), wherein the bearing (121) is configured to rotatably support at least a portion of a rotatable member (125) extending along an axial direction (126),
- an enclosure (127), wherein the enclosure (127) encloses an interior space (128) in which the bearing (121) is arranged,
- a deflection arrangement (200) for deflecting a lubricant (300) towards the bearing (121), wherein the deflection arrangement (200) is arranged in the interior space (128) and is axially distanced from the inner ring (122) and axially distanced from the outer ring (123).

2. Bearing assembly (120) according to claim 1, wherein the deflection arrangement (200) is configured to deflect the lubricant (300) towards the rolling element (124) and/or a raceway (138, 139) of at least one of the inner ring (122) and the outer ring (123) of the bearing (121).

3. Bearing assembly (120) according to claims 1 and 2, wherein the deflection arrangement (200) comprises a deflection element (202) having a surface (203) which is inclined with respect to at least one of the axial direction (126), a leading surface (131) of the rolling element (124), and the raceway (138, 139) of at least one of the inner ring (122) and the outer ring (123).

4. Bearing assembly (120) according to any one of the preceding claims, comprising a support (204) for supporting the deflection arrangement (200) in the interior space (128).

5. Bearing assembly (120) according to claim 4, wherein the support (204) comprises a barrier (205) extending circumferentially inside the interior space (128) for reducing a flow of the lubricant (300) away from the rolling element (124) and/or the raceway (138, 139) of at least one of the inner ring (122) and the outer ring (123).

6. Bearing assembly (120) according to claim 5, wherein the barrier (204) extends circumferentially around the axial direction (126) for up to 360°.

7. Bearing assembly (120) according to claims 4 to 6, wherein the support (204) encloses a hollow region (206) which is in fluid communication with the interior space (128), wherein the hollow region (206) is configured to regulate a characteristic of the lubricant (300) inside the interior space (128).

8. Bearing assembly (120) according to any one of claims 4 to 7, wherein the deflection arrangement (200) and the support (204) are arranged at least partly in the interior space (128) between a sealing arrangement (135) of the bearing assembly (120) and the bearing (121).

9. Bearing assembly (120) according to claims 3 and 8, wherein the support (204) is configured to at least partly adjoin a seal carrier (208) of the sealing arrangement (207), and wherein at least a portion (204A) of the support (204) is arranged behind the surface (203) of the deflection arrangement (200) relative to a main direction (209) of rotation of the rotatable member (125).

10. Bearing assembly (120) according to any one of the preceding claims, wherein the deflection arrangement (200) comprises at least one of a planar form and a curvilinear form, in particular an arcuate form, and wherein the deflection arrangement (200) is selected from one of a plate element, a sheet element, a bar element, a rod element, an open channel element, a closed channel element, a vane element, a flange element, and an angular bracket.

11. Bearing assembly (120) according to any one of the preceding claims, wherein the deflection arrangement (200) extends at least over a characteristic length of the rolling element (124), in particular a diameter of the rolling element (124).

12. Bearing assembly (120) according to one of the preceding claims, wherein the deflection arrangement (200) is fixed in position relative to the enclosure (127).

13. Bearing assembly (120) according to any one of the preceding claims, wherein an orientation of the deflection arrangement (200) can be adjusted relative to at least one of the axial direction (126), the leading surface (131) of the rolling element (124), and a raceway 138, 139 of at least one of the inner ring (122) and the outer ring (123) by an adjusting device (211).

14. Bearing assembly (120) according to claim 1, wherein the deflection arrangement (200) is movable within the interior space (128).

15. Bearing assembly (120) according to claim 14, wherein the deflection arrangement (200) is fixed to a rotatable element (132) of the bearing assembly (120), in particular fixed to at least one of: a cage (134) supporting the rolling element (124), and the rolling element (124).

16. Bearing assembly (120) according to claims 14 or 15, comprising an attachment (212) configured to fix the deflection arrangement (200) to the rotatable element (132) of the bearing assembly (120).

17. Bearing assembly (120) according to any one of the claims 14 to 15, wherein the deflection arrangement (200) comprises a rotatable propeller (213).

18. Bearing system (150) for a wind turbine (100), comprising
- a bearing assembly (200) according to any one of the preceding claims,
- the rotatable member (125), wherein the rotatable member (125) is rotatably supported by the bearing (121), wherein the deflection arrangement (200) is configured to deflect lubricant (300) towards the bearing (121) during a rotation of the rotatable member (125).

19. Bearing system (150) according to claim 18, comprising a nut (151) which is fastened around at least a portion of the rotatable member (125), the nut (151) being axially distant or in axial contact with one of the inner ring (122) and the outer ring (123), wherein the deflection arrangement (200) is fixed to the nut (151).

20. Bearing system (150) according to claim 18 or 19, wherein the bearing system (150) comprises a lubricant raising element (153) for directing lubricant (300) towards an upper region (129) of the bearing (121).
